# EUROPEAN PATENT APPLICATION

(11) **EP 4 753 326 A1**
(43) Date of publication of application: **03.06.2026**
(21) Application number: 24844217.0
(22) Date of filing: 23.02.2024
(51) Int. Cl.: H04W 36/00

(54) **DATA FORWARDING METHOD AND APPARATUS, AND STORAGE MEDIUM**

(30) Priority: 27.07.2023 CN 202310938671
(71) Applicant: ZTE Corporation, Shenzhen, Guangdong 518057 (CN)
(72) Inventor: MA, Zijiang, Shenzhen, Guangdong 518057 (CN); LIU, Hongjun, Shenzhen, Guangdong 518057 (CN); LI, Dapeng, Shenzhen, Guangdong 518057 (CN)
(74) Representative: Vossius & Partner Patentanwälte Rechtsanwälte mbB
(86) International application number: PCT/CN2024/078349
(87) International publication number: WO 2025/020518

(57) **Abstract**

Provided are a data forwarding method and apparatus, and a storage medium. The data forwarding method, wherein the method is applied to a target master node and comprises: acquiring information of a node where a to-be-migrated bearer is originally located; acquiring first connection information based on the information of the node where the to-be-migrated bearer is originally located; wherein the first connection information is used to indicate whether there is a connection between the node where the to-be-migrated bearer is originally located and a target secondary node; and sending a first data forwarding address of the to-be-migrated bearer to a source master node based on the first connection information.

## Description

The present disclosure claims a priority to Chinese Patent Application No. 202310938671.1, and filed on July 27, 2023, the entire content of which is incorporated into the present application by reference.

### TECHNICAL FIELD

The present disclosure relates to the field of communication technologies, and in particular, to a data forwarding method and apparatus, and a storage medium.

### BACKGROUND

In some technologies, in a process of migrating a to-be-migrated bearer from a node where it is originally located to a target secondary node, an intermediate node located between the node where the to-be-migrated bearer is originally located and the target secondary node generates a forwarding address corresponding to the intermediate node based on the forwarding address corresponding to the target secondary node, and then sends the forwarding address corresponding to the intermediate node to the node where the to-be-migrated bearer is originally located. Thus, to-be-migrated data is transmitted to the intermediate node through the forwarding address corresponding to the intermediate node, and then is transmitted to the target secondary node through the forwarding address corresponding to the target secondary node.

### SUMMARY

In an aspect, the embodiments of the present disclosure provide a data forwarding method, which is applied to a target master node. The data forwarding method includes:
acquiring information of a node where a to-be-migrated bearer is originally located;
acquiring first connection information based on the information of the node where the to-be-migrated bearer is originally located; where the first connection information is used to indicate whether there is a connection between the node where the to-be-migrated bearer is originally located and a target secondary node; and
sending a first data forwarding address of the to-be-migrated bearer to a source master node based on the first connection information.

In another aspect, the embodiments of the present disclosure provide a data forwarding method, which is applied to a source master node. The data forwarding method includes:
sending information of a node where a to-be-migrated bearer is originally located; and
receiving a first data forwarding address of the to-be-migrated bearer sent from a target master node; where the first data forwarding address is determined according to first connection information; the first connection information is used to indicate whether there is a connection between the node where the to-be-migrated bearer is originally located and the target secondary node.

In yet another aspect, the embodiments of the present disclosure provide a data forwarding apparatus, which is applied to a target master node. The data forwarding apparatus includes:
an acquiring module, configured to acquire information of a node where a to-be-migrated bearer is originally located;
the acquiring module, further configured to acquire first connection information based on the information of the node where the to-be-migrated bearer is originally located; where the first connection information is used to indicate whether there is a connection between a first node and a target secondary node; and the first node is the node where the to-be-migrated bearer is originally located; and
a sending module, further configured to send a first data forwarding address of the to-be-migrated bearer to the source master node based on the first connection information.

In yet another aspect, the embodiments of the present disclosure provide a data forwarding apparatus, which is applied to a source master node. The data forwarding apparatus includes:
a sending module, configured to send information of a node where a to-be-migrated bearer is originally located; and
a receiving module, further configured to receive a first data forwarding address of the to-be-migrated bearer sent from a target master node; where the first data forwarding address is determined according to first connection information; and the first connection information is used to indicate whether there is a connection between the node where the to-be-migrated bearer is originally located and the target secondary node.

In yet another aspect, the embodiments of the present disclosure provide a communication apparatus. The communication apparatus includes: a memory and a processor; the memory is coupled with the processor; the memory is configured to store computer program instructions executable by the processor; and the processor, when executing the computer program instructions, implements the data forwarding method described in any one of the above embodiments.

In yet another aspect, the embodiments of the present disclosure provide a computer readable storage medium. The computer readable storage medium stores computer program instructions, and the computer program instructions, when executed on a computer (e.g., a communication apparatus or a signal transmission apparatus), implement the data forwarding method described in any one of the above embodiments.

In yet another aspect, the embodiments of the present disclosure provide a computer program product. The computer program product includes computer program instructions, and the computer program instructions, when executed, implement the data forwarding method described in any one of the above embodiments.

### BRIEF DESCRIPTION OF THE DRAWINGS

FIG. 1 is a schematic diagram of an architecture of a dual-connectivity network according to some embodiments.
FIG. 2 is a flow chart of a migration from a source secondary node to a T-eNB according to some embodiments.
FIG. 3 is a flow chart of a migration from a source secondary node to a T-Ng-eNB/gNB according to some embodiments.
FIG. 4 is a flow chart of a migration from a source secondary node to a target secondary node according to some embodiments.
FIG. 5 is a flow chart of another migration from a source secondary node to a target secondary node according to some embodiments.
FIG. 6 is a schematic flowchart of a data forwarding method according to some embodiments.
FIG. 7 is a schematic flowchart of another data forwarding method according to some embodiments.
FIG. 8 is a flow chart of an interaction of a data forwarding method according to some embodiments.
FIG. 9 is a flow chart of an interaction of another data forwarding method according to some embodiments.
FIG. 10 is a flow chart of an interaction of yet another data forwarding method according to some embodiments.
FIG. 11 is a flow chart of an interaction of yet another data forwarding method according to some embodiments.
FIG. 12 is a flow chart of an interaction of yet another data forwarding method according to some embodiments.
FIG. 13 is a structural schematic diagram of a data forwarding apparatus according to some embodiments.
FIG. 14 is a structural schematic diagram of another data forwarding apparatus according to some embodiments.
FIG. 15 is a structural schematic diagram of a communication apparatus according to some embodiments.

### DETAILED DESCRIPTION

The technical solutions in the embodiments of the present disclosure will be described clearly and completely below in conjunction with the drawings in the embodiments of the present disclosure. Obviously, the described embodiments are only a part of the embodiments of the present disclosure, not all of the embodiments. Based on the embodiments in the present disclosure, all other embodiments obtained by those ordinary skilled without creative efforts shall fall within the protection scope of the present disclosure.

In the description of the present disclosure, unless otherwise specified, the symbol "/" means "or", for example, "A/B" may mean A or B. Herein, "and/or" merely describes an association relationship of associated objects, and means that there are three kinds of relationships, and for example, A and/or B may mean: only A, only B, and both A and B. In addition, "at least one" means one or more, and the "more" or variants thereof means two or more. Expressions, such as "first" and "second", etc., do not limit the number and execution order, and the expressions, such as "first" and "second", etc., also do not necessarily limit different items.

It should be noted that in the present disclosure, the expressions such as "exemplary/exemplarily" or "for example" are used to present an example, illustration, or explanation. Any embodiment or design scheme described with "exemplary/exemplarily" or "for example",etc. in the present disclosure should not be construed as preferred or advantageous over other embodiments or design schemes. Rather, the usage of the expressions, such as "exemplary/exemplarily" or "for example", is intended to present relevant concepts in a detailed manner.

A mobile communication system in some technologies includes a mobile user equipment (User equipment, UE) and a network device. The network device includes a radio access network (RAN) and a core network (CN). The RAN includes: one or more cell groups, or one or more base stations, or one or more Node Bs.

In a fifth generation mobile communication technology (5G) system, the core network (CN) refers to a fifth generation mobile communication technology core network (5G Core, 5GC). The 5GC includes a network element, a such as access and mobility management function (AMF), a user plane function (UPF), and a system management function (SMF).

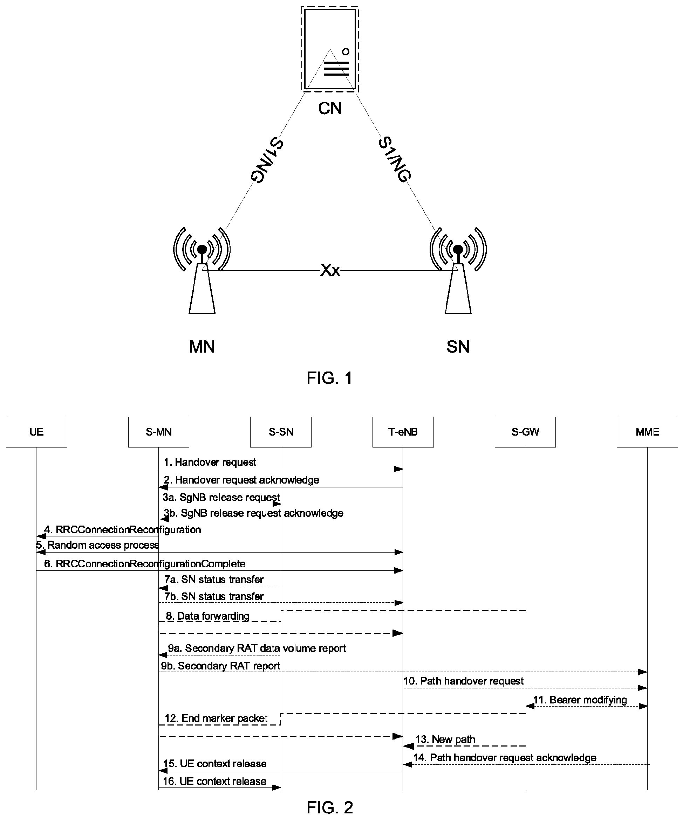

In a dual-connectivity system, the UE establishes two or more connections with the network device. As shown in FIG. 1, the user plane function (UPF) network element in the CN establishes connections with two cell groups in the RAN, respectively. The RAN includes a master node (MN) and a secondary node (SN).

In some technologies, a connection established between two nodes is referred to as an Xx connection, i.e., a direct connection. Since there is a direct connection between the two nodes, that is, there is a direct data forwarding path between the two nodes, data may be forwarded directly from a source node to a target node. When the two nodes both are NodeBs or eNBs, the Xx connection is also referred to as an X2 connection. When the two nodes both are gNBs, the Xx connection is also referred to as an Xn connection. When the Xx connection is established between two nodes, the two nodes may transmit a control plane signaling and user plane data.

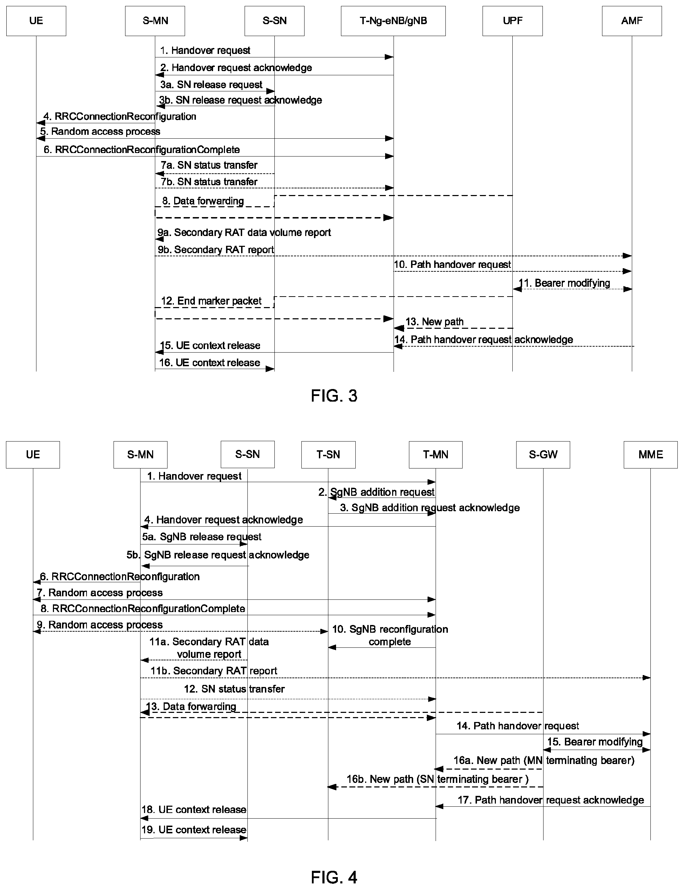

Exemplarily, FIG. 2 is a flow chart of a migration from a source secondary node to a T-eNB provided in the present disclosure. The migration process is established in a dual-connectivity system of an EN-DC (4G and 5G). FIG. 3 is a flow chart of the migration from a source secondary node to a T-Ng-eNB/gNB provided in the present disclosure. The migration process is established in a dual-connectivity system of the 5G.

Continuing to refer to FIG. 2 or FIG. 3, when a bearer is migrated from a source secondary node (S-SN) to a target node, the target node is the T-eNB or T-Ng-eNB/gNB. The bearer may be at least one of: a radio bearer, a radio access bearer (RAB), an enhanced radio access bearer, a protocol data unit (PUD) session, or a quality of service flow (QoS flow), as defined in detail in the 3rd Generation Partnership Project (3GPP) protocol. A part of the migration process is as follows.

Step 1, a source master node (S-MN) sends a handover request message to a target node and the message includes relevant information of a to-be-migrated bearer.

Step 2, the target node sends a handover request acknowledge message to an S-MN and the message includes a data forwarding address corresponding to the target node.

Step 3a, the S-MN sends an SN release request message to the S-SN and the message includes a data forwarding address corresponding to the S-MN generated by the S-MN based on the data forwarding address corresponding to the target node.

In this way, the S-SN, after receiving the SN release request message, first sends data of the S-SN to the S-MN and then sends to the target node. In an actual process, if there is an Xx connection between the source secondary node S-SN and the target node, the data of the S-SN may be sent directly to the target node without going through the S-MN node.

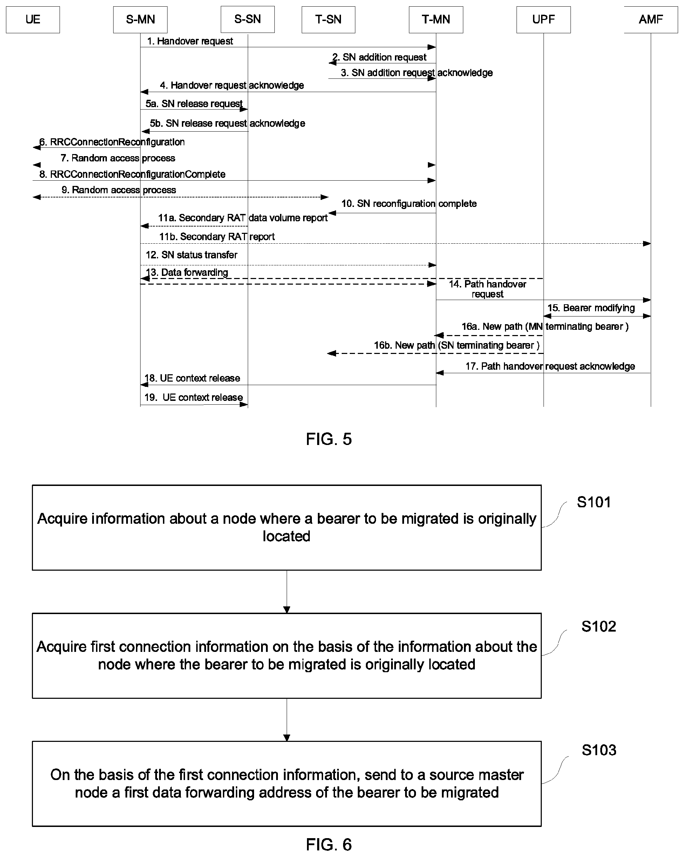

As another example, FIG. 4 is a flow chart of a migration from a source secondary node to a target secondary node (T-SN) provided in the present disclosure and the migration process is established under a dual-connectivity system of an EN-DC (4G and 5G). FIG. 5 is a flow chart of another migration from a source secondary node to a target secondary node provided in the present disclosure and the migration process is established under a dual-connectivity system of the 5G.

Continuing to refer to FIG. 4 or FIG. 5, when a bearer is migrated from the S-SN to the T-SN, a part of the migration process is as follows.

Step 1, the S-MN sends a handover request message to the target master node (T-MN) and the message includes relevant information of the bearer.

Step 2, the T-MN sends an SN addition request message to the T-SN and the message includes relevant information of the bearer.

Step 3, the T-SN sends an SN addition request acknowledge message to the T-MN and the message includes a forwarding address corresponding to the T-SN.

Step 4, the T-MN sends a handover request acknowledge message to the S-MN and the message includes a forwarding address corresponding to the T-MN generated by the T-MN based on the forwarding address corresponding to the T-SN.

Thus, the data of the S-SN is first sent to the T-MN through the forwarding address of the T-MN, and then sent to the T-SN through the forwarding address of the T-SN.

In an actual process, if there is an Xx connection between the S-SN and T-SN, the data of the S-SN may be sent directly from the S-SN to the T-SN, and there is no need to send the data of the S-SN to a T-MN node first and then send to the T-SN.

For the node where the to-be-migrated bearer is originally located is the S-MN, during the migration process to the T-SN, the data of the S-MN needs to be first sent to the T-MN and then sent to the T-SN.

In summary, when one or more to-be-migrated bearers are migrated from the source node where the bearers are located to the target node, since an intermediate node located between the source node where the bearers are located and the target node does not know whether there is a direct connection between the source node where the bearers are located and the target node, the intermediate node, after receiving the forwarding address corresponding to the target node, generates a forwarding address of the intermediate node and sends the forwarding address to the source node where the bearers are located. In this way, data of the to-be-migrated bearer is transmitted from the source node, through the intermediate node, to the target node, which increases a duration of data transmission and leads to low efficiency of the data transmission.

The embodiments of the present disclosure provide a data forwarding method, which is applied to a target master node, as shown in FIG. 6. The method includes the following content.

S101, a target master node acquires information of a node where a to-be-migrated bearer is originally located.

The node where the to-be-migrated bearer is originally located may be a source master node or a source secondary node. The information of the node where the to-be-migrated bearer is originally located includes, but is not limited to, an identifier of the node where the to-be-migrated bearer is originally located.

As an implementation, the target master node may acquire the information of the node where the to-be-migrated bearer is originally located from the source master node. For example, the target master node may receive a handover request message sent from the source master node, and the handover request message includes the information of the node where the to-be-migrated bearer is originally located.

For example, in a case where there is only one to-be-migrated bearer, the handover request message may carry the identifier of the source master node but not the identifier of the source secondary node to represent that the node where the to-be-migrated bearer is originally located is the source master node; or, the handover request message may carry the identifier of the source master node and the identifier of the source secondary node to represent that the node where the to-be-migrated bearer is originally located is the source secondary node.

Exemplarily, in a case where there are one or more to-be-migrated bearers, the handover request message may include the identifier of the source master node, the identifier of the source secondary node, identifiers of respective to-be-migrated bearers, and first indication information corresponding to respective to-be-migrated bearers.

The first indication information is used to indicate whether the node where the corresponding to-be-migrated bearer is originally located is the source master node or the source secondary node. For example, a value of the first indication information is a first value to represent that the node where the to-be-migrated bearer is originally located is the source master node; or a value of the first indication information is a second value to represent that the node where the to-be-migrated bearer is originally located is the source secondary node.

Alternatively, the first indication information is used to indicate whether the node where the corresponding to-be-migrated bearer is originally located is the source master node. For example, the value of the first indication information is the first value, to represent that the node where the to-be-migrated bearer is originally located is the source master node; or, the value of the first indication information is the second value, to represent that the node where the to-be-migrated bearer is originally located is not the source master node, which indirectly represents that the node where the to-be-migrated bearer is originally located is the source secondary node.

Alternatively, the first indication information is used to indicate whether the node where the corresponding to-be-migrated bearer is originally located is the source secondary node. For example, the value of the first indication information is the first value, to represent that the node where the to-be-migrated bearer is originally located is the source secondary node; or, the value of the first indication information is the second value, to represent that the node where the to-be-migrated bearer is originally located is not the source secondary node, which indirectly represents that the node where the to-be-migrated bearer is originally located is the source master node.

It should be understood that, the target master node may also obtain information of the node where the to-be-migrated bearer is originally located from a terminal or a core network element and the embodiments of the present disclosure do not limit the manner in which the target master node acquires the information of the node where the migrated bearer is originally located.

S102, the target master node acquires first connection information based on the information of the node where the to-be-migrated bearer is originally located.

The first connection information is used to indicate whether there is a connection between the node where the to-be-migrated bearer is originally located and the target secondary node.

As an implementation, the target master node sends a secondary node addition request message to the target secondary node, and the secondary node addition request message includes the information of the node where the to-be-migrated bearer is originally located; the target master node receives a secondary node addition request response message sent from the target secondary node, and the secondary node addition request response message includes the first connection information.

Exemplarily, in a case where there is only one to-be-migrated bearer, the secondary node addition request message includes the identifier of the source master node, and not include the identifier of the source secondary node, to represent that the node where the to-be-migrated bearer is originally located is the source master node; or, the secondary node addition request message includes the identifier of the source master node and the identifier of the source secondary node, to represent that the node where the to-be-migrated bearer is originally located is the source secondary node.

Exemplarily, in a case where there are one or more to-be-migrated bearers, the secondary node addition request message may include the identifier of the source master node, the identifier of the source secondary node, identifiers of respective to-be-migrated bearers, and first indication information corresponding to respective to-be-migrated bearers. For the introduction of the first indication information, reference may be made to the above, which will not be repeated herein.

It should be understood that, the secondary node addition request response message may be used to carry the first connection information in an explicit manner or an implicit manner. Taking an example of the implicit manner, in a case where there is a connection between the node where the to-be-migrated bearer is originally located and the target secondary node, the secondary node addition request response information may include second indication information used for indicating that there is a connection between the node where the to-be-migrated bearer is originally located and the target secondary node; in a case there there is not a connection between the node where the to-be-migrated bearer is originally located and the target secondary node, the secondary node addition request response information does not include the second indication information. In a case where the node where the to-be-migrated bearer is originally located is the source secondary node, a name of the second indication information may be a direct forwarding path availability (Direct Forwarding path availability) parameter between the S-SN and the T-SN.

In some embodiments, for the node where the to-be-migrated bearer is originally located is a source secondary node, the secondary node addition request response message further includes second connection information, and the second connection information is used to indicate whether there is a connection between the source master node and the target secondary node. It should be understood that, the secondary node addition request response message may be used to carry the second connection information in an explicit manner or an implicit manner.

In some embodiments, the secondary node addition request response message further includes a data forwarding address corresponding to the target secondary node.

As another implementation, the target master node may also determine the first connection information by obtaining topology information related to the target secondary node. The topology information related to the target secondary node may be provided to the target master node by the core network element or the target secondary node.

S103, the target master node sends a first data forwarding address of the to-be-migrated bearer to the source master node based on the first connection information.

The first data forwarding address is introduced in combination with different cases of the node where the to-be-migrated bearer is originally located.
(1) The node where the to-be-migrated bearer is originally located is the source master node.

In the case where the first connection information is used to indicate that there is a connection between the target secondary node and the source master node, the first data forwarding address is a data forwarding address corresponding to the target secondary node; or
in a case where the first connection information is used to indicate that there is not a connection between the target secondary node and the source master node, the first data forwarding address is a data forwarding address corresponding to the target master node.

(2) For the node where the to-be-migrated bearer is originally located is the source secondary node.

Step S103 may be implemented as that: the target master node, acquires the second connection information, where the second connection information is used to indicate whether there is a connection between the source master node and the target secondary node; and sends the first data forwarding address to the source master node based on the first connection information and the second connection information.

In the case where the first connection information is used to indicate that there is a connection between the target secondary node and the source secondary node, the first data forwarding address is a data forwarding address corresponding to the target secondary node; or
in a case where the first connection information is used to indicate that there is not a connection between the target secondary node and the source secondary node, and the second connection information is used to indicate that there is a connection between the target secondary node and the source master node, the first data forwarding address is the data forwarding address corresponding to the target secondary node; or
in a case where the first connection information is used to indicate that there is not a connection between the target secondary node and the source secondary node, and the second connection information is used to indicate that there is a connection between the target secondary node and the source master node, the first data forwarding address is a data forwarding address corresponding to the target master node.

In some embodiments, the target master node sends a handover request response message the source master node, where the handover request response message includes the first data forwarding address.

In some embodiments, the handover request response message further includes the first connection information. Exemplarily, in a case where there is a connection between the node where the to-be-migrated bearer is originally located and the target secondary node, the handover request response message also includes the first connection information; and in a case where there is not a connection between the node where the to-be-migrated bearer is originally located and the target secondary node, the handover request response message may not include the first connection information.

In the embodiments of the present disclosure, since the first data forwarding address of the to-be-migrated bearer provided by the target master node to the source master node is determined based on whether there is a connection between the node where the to-be-migrated bearer is originally located and the target secondary node, rather than the data forwarding address corresponding to the target master node being directly provided, which may reduce the case where the data of the to-be-migrated bearer needs to be sent to the target master node first and then sent to the target secondary node, which is conducive to improving the transmission efficiency of data.

For example, in a case where there is a connection between the node where the to-be-migrated bearer is originally located and the target secondary node, the first data forwarding address is a forwarding address corresponding to the target secondary node. In this way, the data of the to-be-migrated bearer may be transmitted to the target secondary node, without the target master node, thereby the transmission efficiency of data is improved.

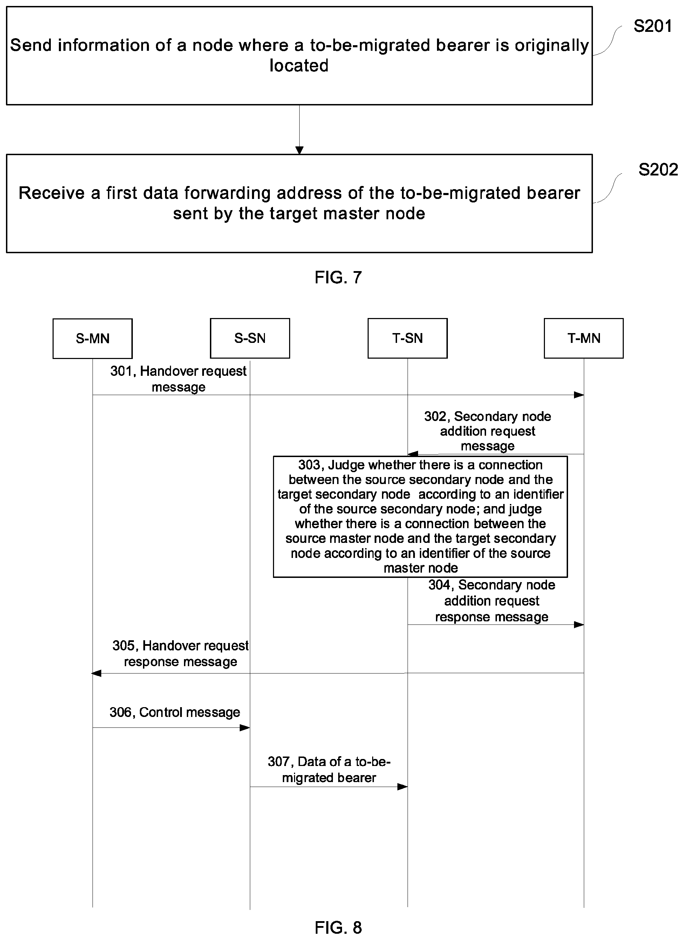

The embodiments of the present disclosure provide a data forwarding method, which is applied to a source master node. As shown in FIG. 7, the method includes the following steps.

S201, a source master node sends information of a node where a to-be-migrated bearer is originally located to a target master node.

The node where the to-be-migrated bearer is originally located may be a source master node or a source secondary node. The information of the node where the to-be-migrated bearer is originally located includes, but is not limited to, an identifier of the node where the to-be-migrated bearer is originally located.

As an implementation, the source master node sends a handover request message to the target master node, where the handover request message includes the information of the node where the to-be-migrated bearer is originally located. For the implementation of the handover request message carrying the information of the node where the to-be-migrated bearer is originally located, reference may be made to the above, which will not be repeated herein.

S202, the source master node receives a first data forwarding address of the to-be-migrated bearer sent from the target master node.

The first data forwarding address is determined according to first connection information; the first connection information is used to indicate whether there is a connection between the node where the to-be-migrated bearer is originally located and the target secondary node.

The first data forwarding address is introduced in combination with different cases of the node where the to-be-migrated bearer is originally located.
(1) The node where the to-be-migrated bearer is originally located is the source master node.

In a case where the first connection information is used to indicate that there is a connection between the target secondary node and the source master node, the first data forwarding address is a data forwarding address corresponding to the target secondary node; or
in a case where the first connection information is used to indicate that there is not a connection between the target secondary node and the source master node, the first data forwarding address is a data forwarding address corresponding to the target master node.

(2) The node where the to-be-migrated bearer is originally located is the source secondary node.

The first data forwarding address is determined based on first connection information and second connection information, where the second connection information is used to indicate whether there is a connection between the source master node and the target secondary node.

In a case where the first connection information is used to indicate that there is a connection between the target secondary node and the source secondary node, the first data forwarding address is a data forwarding address corresponding to the target secondary node; or
in a case where the first connection information is used to indicate that there is not a connection between the target secondary node and the source secondary node, and the second connection information is used to indicate that there is a connection between the target secondary node and the source master node, the first data forwarding address is a data forwarding address corresponding to the target secondary node; or
in a case where the first connection information is used to indicate that there is not a connection between the target secondary node and the source secondary node, and the second connection information is used to indicate that there is not a connection between the target secondary node and the source master node, the first data forwarding address is a data forwarding address corresponding to the target master node.

In some embodiments, the source master node receives a handover request response message sent from the target master node, where the handover request response message includes the first data forwarding address.

In some embodiments, in response to that the node where the to-be-migrated bearer is originally located is a source secondary node, the handover request response message further includes the first connection information.

In some embodiments, in a case where the node where the to-be-migrated bearer is originally located is the source secondary node, the source master node sends a second data forwarding address to the source secondary node based on the first connection information. In a case where the first connection information is used to indicate that there is a connection between the target secondary node and the source secondary node, the second data forwarding address is the first data forwarding address. In a case where the first connection information is used to indicate that there is not a connection between the target secondary node and the source secondary node, the second data forwarding address may be a data forwarding address corresponding to the target secondary node.

In the embodiments of the present disclosure, since the first data forwarding address of the to-be-migrated bearer provided by the target master node to the source master node is determined based on whether there is a connection between the node where the to-be-migrated bearer is originally located and the target secondary node, rather than the data forwarding address corresponding to the target master node being directly provided, which may reduce the case where the data of the to-be-migrated bearer needs to be sent to the target master node first and then sent to the target secondary node, which is conducive to improving the transmission efficiency of data.

Exemplarily, FIG. 8 is a flow chart of an interaction of a data forwarding method, provided in the embodiments of the present disclosure. As shown in FIG. 8, in a case where the node where the to-be-migrated bearer is originally located is the source secondary node and there is a connection between the source secondary node and the target secondary node, migrating the to-be-migrated bearer from the source secondary node to the target secondary node includes the following steps.

301, a source master node sends a handover request message to a target master node and the handover request message includes an identifier of a source secondary node.

302, the target master node sends a secondary node addition request message to a target secondary node and the secondary node addition request message includes an identifier of the source secondary node and an identifier of the source master node.

303, the target secondary node judges whether there is a connection between the source secondary node and the target secondary node according to the identifier of the source secondary node; and judges whether there is a connection between the source master node and the target secondary node according to the identifier of the source master node.

304, the target secondary node sends a secondary node addition request response message to the target master node and the secondary node addition request response message includes first connection information and a data forwarding address corresponding to the target secondary node and the first connection information is used to indicate that there is a connection between the target secondary node and the source secondary node.

305, the target master node sends a handover request response message to the source master node and the handover request response message includes the first connection information and the data forwarding address corresponding to the target secondary node.

306, the source master node sends a control message to a source secondary node and the control message includes the first connection information and the data forwarding address corresponding to the target secondary node. The control message is an SN release request message or an Xn-U address indication (Xn-U Address Indication) message.

307, the source secondary node sends data of the to-be-migrated bearer to the target secondary node through the data forwarding address corresponding to the target secondary node.

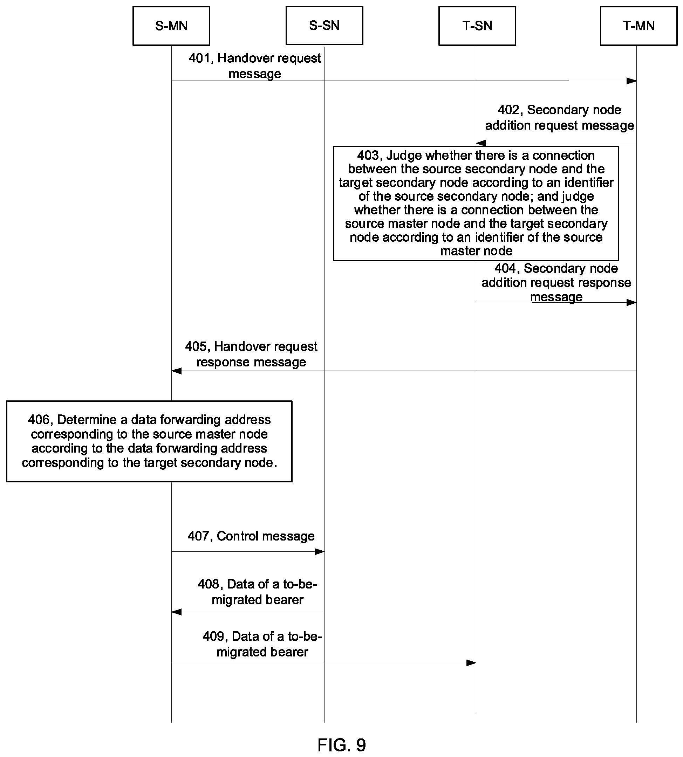

Exemplarily, FIG. 9 is a flow chart of an interaction of a data forwarding method, provided in the embodiments of the present disclosure. As shown in FIG. 9, in a case where the node where the to-be-migrated bearer is originally located is the source secondary node, there is not a connection between the target secondary node and the source secondary node, and there is a connection between the target secondary node and the source master node, migrating the to-be-migrated bearer from the source secondary node to the target secondary node includes the following steps.

401, a source master node sends a handover request message to a target master node and the handover request message includes an identifier of a source secondary node.

402, the target master node sends a secondary node addition request message to a target secondary node and the secondary node addition request message includes an identifier of the source secondary node and an identifier of the source master node.

403, the target secondary node judges whether there is a connection between the source secondary node and the target secondary node according to the identifier of the source secondary node; and judges whether there is a connection between the source master node and the target secondary node according to the identifier of the source master node.

404, the target secondary node sends a secondary node addition request response message to the target master node and the secondary node addition request response message includes first connection information, second connection information and a data forwarding address corresponding to the target secondary node, the first connection information is used to indicate that there is not a connection between the target secondary node and the source secondary node, and the second connection information is used to indicate that there is a connection between the target secondary node and the source master node.

405, the target master node sends a handover request response message to the source master node and the handover request response message includes the first connection information, the second connection information and the data forwarding address corresponding to the target secondary node.

406, the source master node determines a data forwarding address corresponding to the source master node according to the data forwarding address corresponding to the target secondary node.

407, the source master node sends a control message to the source secondary node and the control message includes the data forwarding address corresponding to the source master node. The data forwarding address corresponding to the source master node is determined according to the data forwarding address corresponding to the target secondary node. The control message is an SN release request message or an Xn-U Address Indication message.

408, the source secondary node sends data of the to-be-migrated bearer to the source master node through the data forwarding address corresponding to the source master node.

409, the source master node sends the data of the to-be-migrated bearer to the target secondary node through the data forwarding address corresponding to the target secondary node.

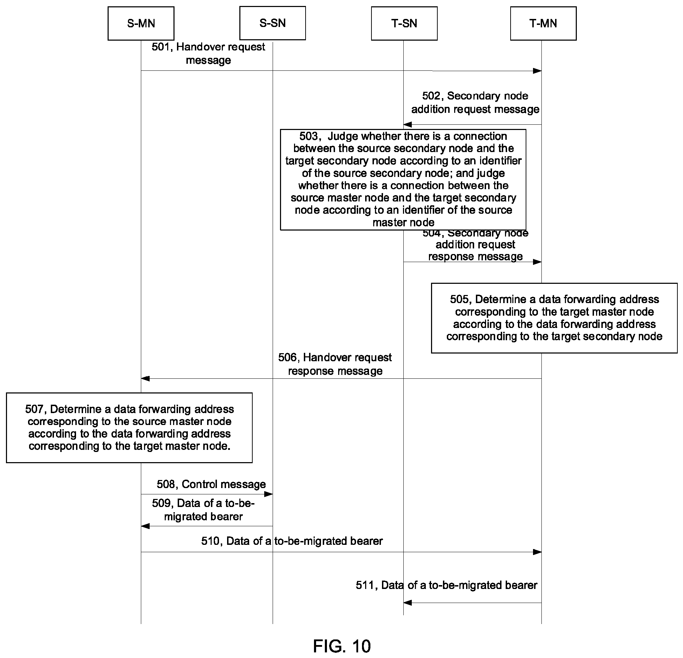

Exemplarily, FIG. 10 is a flow chart of an interaction of a data forwarding method, provided in the embodiments of the present disclosure. As shown in FIG. 10, in a case where the node where the to-be-migrated bearer is originally located is the source secondary node, there is not a connection between the target secondary node and the source secondary node, and there is not a connection between the target secondary node and the source master node, migrating the to-be-migrated bearer from the source secondary node to the target secondary node includes the following steps.

501, a source master node sends a handover request message to a target master node and the handover request message includes an identifier of a source secondary node.

502, the target master node sends a secondary node addition request message to a target secondary node and the secondary node addition request message includes an identifier of the source secondary node and an identifier of the source master node.

503, the target secondary node judges whether there is a connection between the source secondary node and the target secondary node according to the identifier of the source secondary node; and judges whether there is a connection between the source master node and the target secondary node according to the identifier of the source master node.

504, the target secondary node sends a secondary node addition request response message to the target master node and the secondary node addition request response message includes first connection information, second connection information and a data forwarding address corresponding to the target secondary node, the first connection information is used to indicate that there is not a connection between the target secondary node and the source secondary node, and the second connection information is used to indicate that there is not a connection between the target secondary node and the source master node.

505, the target master node determines a data forwarding address corresponding to the target master node according to the data forwarding address corresponding to the target secondary node.

506, the target master node sends a handover request response message to the source master node and the handover request response message includes the first connection information, the second connection information and the data forwarding address corresponding to the target master node.

507, the source master node determines a data forwarding address corresponding to the source master node according to the data forwarding address corresponding to the target master node.

508, the source master node sends a control message to the source secondary node and the control message includes the data forwarding address corresponding to the source master node.

The control message is an SN release request message or an Xn-U address indication (Xn-U Address Indication) message.

509, the source secondary node sends the to-be-migrated bearer to the source master node through the data forwarding address corresponding to the source master node.

510, the source master node sends the data of the to-be-migrated bearer to the target master node through the data forwarding address corresponding to the target master node.

511, the target master node sends the data of the to-be-migrated bearer to the target secondary node through the data forwarding address corresponding to the target secondary node.

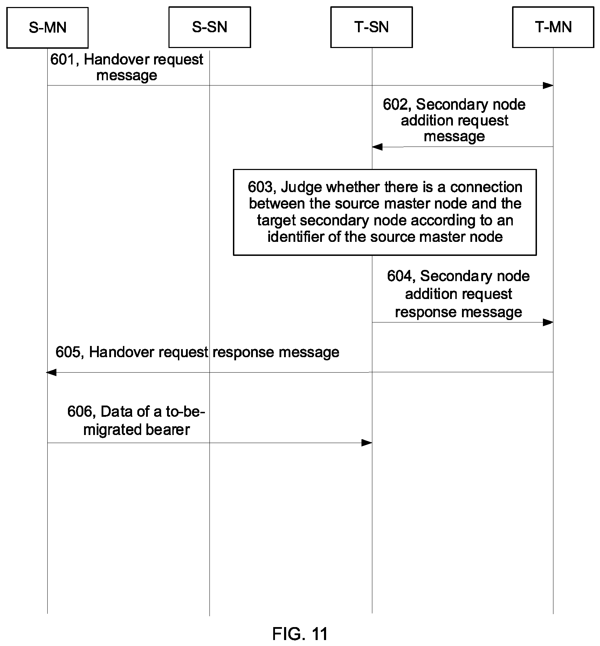

Exemplarily, FIG. 11 is a flow chart of an interaction of a data forwarding method, provided in the embodiments of the present disclosure. As shown in FIG. 11, in a case where the node where the to-be-migrated bearer is originally located is the source master node and there is a connection between the source master node and the target secondary node, migrating the to-be-migrated bearer from the source master node to the target secondary node includes the following steps.

601, a source master node sends a handover request message to a target master node and the handover request message includes an identifier of a source master node.

602, the target master node sends a secondary node addition request message to a target secondary node and the secondary node addition request message includes an identifier of the source master node.

603, the target secondary node judges whether there is a connection between the source master node and the target secondary node according to the identifier of the source master node.

604, the target secondary node sends a secondary node addition request response message to the target master node and the secondary node addition request response message includes first connection information and a data forwarding address corresponding to the target secondary node and the first connection information is used to indicate that there is a connection between the target secondary node and the source master node.

605, the target master node sends a handover request response message to the source master node and the handover request response message includes the first connection information and the data forwarding address corresponding to the target secondary node.

606, the source master node sends the data of the to-be-migrated bearer to the target secondary node through the data forwarding address corresponding to the target secondary node.

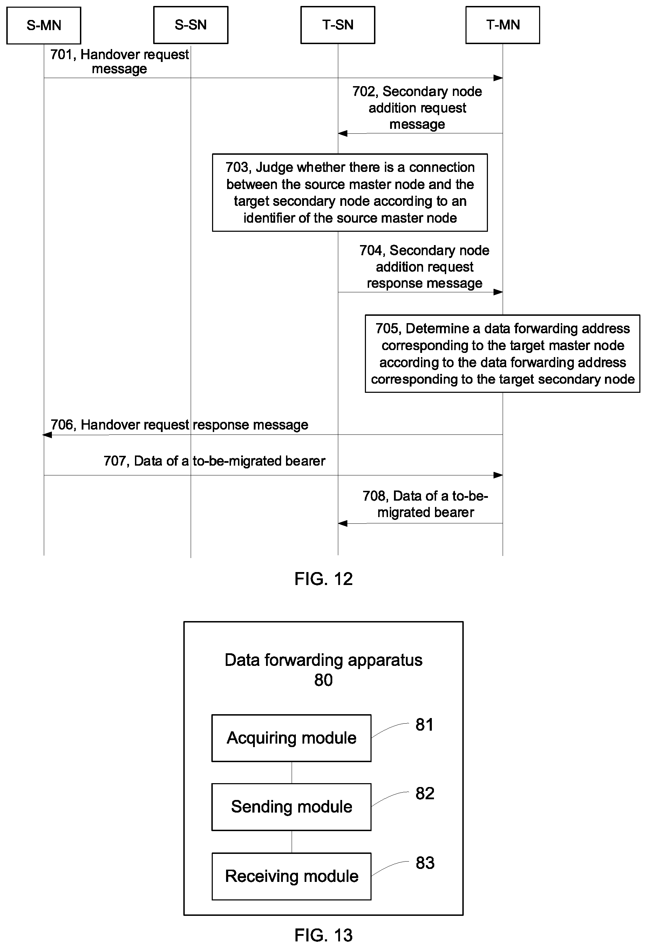

Exemplarily, FIG. 12 is a flow chart of an interaction of a data forwarding method, provided in the embodiments of the present disclosure. As shown in FIG. 12, in a case where the node where the to-be-migrated bearer is originally located is the source master node and there is not a connection between the source master node and the target secondary node, migrating the to-be-migrated bearer from the source secondary node to the target secondary node includes the following steps.

701, a source master node sends a handover request message to a target master node and the handover request message includes an identifier of a source master node.

702, the target master node sends a secondary node addition request message to a target secondary node and the secondary node addition request message includes an identifier of the source master node.

703, the target secondary node judges whether there is a connection between the source master node and the target secondary node according to the identifier of the source master node.

704, the target secondary node sends a secondary node addition request response message to the target master node and the secondary node addition request response message includes first connection information and a data forwarding address corresponding to the target secondary node and the first connection information is used to indicate that there is not a connection between the target secondary node and the source secondary node.

705, the target master node determines a data forwarding address corresponding to the target master node according to the data forwarding address corresponding to the target secondary node.

706, the target master node sends a handover request response message to the source master node and the handover request response message includes a data forwarding address corresponding to the target master node.

707, the source master node sends the data of the to-be-migrated bearer to the target master node through the data forwarding address corresponding to the target master node.

708, the target master node sends the data of the to-be-migrated bearer to the target secondary node through the data forwarding address corresponding to the target secondary node.

The above introduces the solutions of the embodiments of the present disclosure mainly from the perspective of methods. A data forwarding apparatus is also shown below, which is configured to perform the data forwarding method in any one of the above embodiments and possible implementations thereof. It can be understood that, the data forwarding apparatus includes the corresponding hardware structures and/or software modules for performing various functions in order to implement the demodulation reference signal transmission method, and those skilled in the art should easily recognize that the present disclosure can be implemented in the form of hardware or a combination of hardware and computer software, in conjunction with the algorithm steps of various examples described in the embodiments of the present disclosure. Whether a certain function is performed by hardware or by computer software driving hardware, depends on a specific application and a design constraint condition of the technical solution. Professional technicians may use different methods to implement the described functions for each specific application, but these implementations should not be considered beyond the scope of the present disclosure.

In the embodiments of the present disclosure, the data forwarding apparatus may be divided into functional modules according to the above-mentioned method embodiments, and for example, each functional module may be divided corresponding to each function, or two or more functions may also be integrated into one functional module. The above-mentioned integrated module may be implemented in the form of hardware or may be implemented in the form of software. It should be noted that, the division of the modules in the embodiments of the present disclosure is schematic, which is only a logical functional division, and there may be other divisions in actual implementations. The following is an example of dividing each functional module corresponding to each function.

FIG. 13 is a data forwarding apparatus provided in the embodiments of the present disclosure, which is applicable to a target master node. The data forwarding apparatus 80 includes: an acquiring module 81, a sending module 82 and a receiving module 83.

The acquiring module 81 is configured to acquire information of a node where a to-be-migrated bearer is originally located;
the acquiring module 81 is further configured to acquire first connection information based on the information of the node where the to-be-migrated bearer is originally located; where the first connection information is used to indicate whether there is a connection between the node where the to-be-migrated bearer is originally located and a target secondary node; and
the sending module 82 is configured to send a first data forwarding address of the to-be-migrated bearer to a source master node based on the first connection information.

In some embodiments, for the node where the to-be-migrated bearer is originally located is the source master node:
in response to that the first connection information is used to indicate that there is a connection between the target secondary node and the source master node, the first data forwarding address is a data forwarding address corresponding to the target secondary node; or
in response to that the first connection information is used to indicate that there is not a connection between the target secondary node and the source master node, the first data forwarding address is a data forwarding address corresponding to the target master node.

In some embodiments, the acquiring module 81 is configured to acquire second connection information, where the second connection information is used to indicate whether there is a connection between the source master node and the target secondary node; and
the sending module 82 is configured to send the first data forwarding address to the source master node based on the first connection information and the second connection information.

In some embodiments, in response to that the first connection information is used to indicate that there is a connection between the target secondary node and the source secondary node, the first data forwarding address is a data forwarding address corresponding to the target secondary node; or
in response to that the first connection information is used to indicate that there is not a connection between the target secondary node and the source secondary node, and the second connection information is used to indicate that there is a connection between the target secondary node and the source master node, the first data forwarding address is the data forwarding address corresponding to the target secondary node; or
in response to that the first connection information is used to indicate that there is not a connection between the target secondary node and the source secondary node, and the second connection information is used to indicate that there is not a connection between the target secondary node and the source master node, the first data forwarding address is a data forwarding address corresponding to the target master node.

In some embodiments, the sending module 82 is configured to send a secondary node addition request message to the target secondary node, where the secondary node addition request message includes the information of the node where the to-be-migrated bearer is originally located; and
The receiving module 83 is configured to receive a secondary node addition request response message sent from the target secondary node, where the secondary node addition request response message includes the first connection information.

In some embodiments, the secondary node addition request response message further includes a data forwarding address corresponding to the target secondary node.

In some embodiments, for the node where the to-be-migrated bearer is originally located is the source secondary node, the secondary node addition request response message further includes second connection information, and the second connection information is used to indicate whether there is a connection between the source master node and the target secondary node.

In some embodiments, for the node where the to-be-migrated bearer is originally located is the source secondary node, the secondary node addition request message further includes an identifier of the source master node.

In some embodiments, the receiving module 83 is configured to receive a handover request message sent from the source master node, where the handover request message includes the information of the node where the to-be-migrated bearer is originally located.

In some embodiments, the sending module 82 is configured to send a handover request response message the source master node, where the handover request response message includes the first data forwarding address.

In some embodiments, the handover request response message further includes the first connection information.

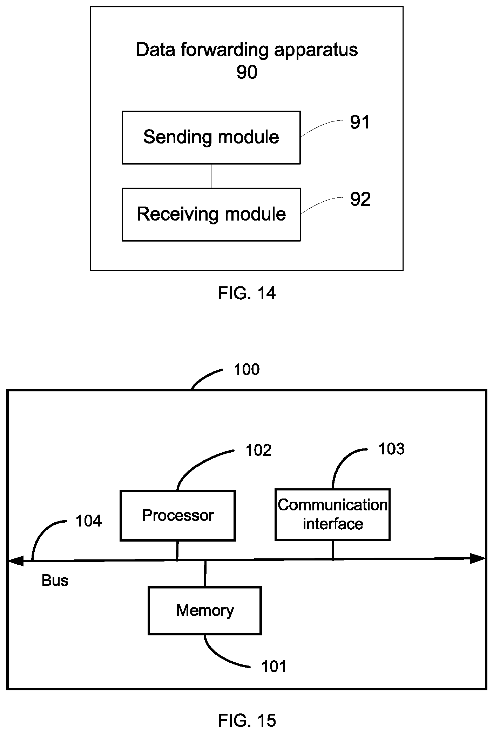

FIG. 14 is a data forwarding apparatus provided in the embodiments of the present disclosure, which is applicable to a source master node. The data forwarding apparatus 90 includes: a sending module 91 and a receiving module 92.

In some embodiments, the sending module 91 is configured to send information of a node where a to-be-migrated bearer is originally located;
the receiving module 92 is further configured to receive a first data forwarding address of the to-be-migrated bearer sent from a target master node; where the first data forwarding address is determined according to first connection information; the first connection information is used to indicate whether there is a connection between the node where the to-be-migrated bearer is originally located and the target secondary node.

In some embodiments, for the node where the to-be-migrated bearer is originally located is the source master node: in response to that the first connection information is used to indicate that there is a connection between the target secondary node and the source master node, the first data forwarding address is a data forwarding address corresponding to the target secondary node; or in response to that the first connection information is used to indicate that there is not a connection between the target secondary node and the source master node, the first data forwarding address is a data forwarding address corresponding to the target master node.

In some embodiments, for the node where the to-be-migrated bearer is originally located is a source secondary node, the first data forwarding address is determined based on the first connection information and second connection information, and the second connection information is used to indicate whether there is a connection between the source master node and the target secondary node.

In some embodiments, in response to that the first connection information is used to indicate that there is a connection between the target secondary node and the source secondary node, the first data forwarding address is a data forwarding address corresponding to the target secondary node; or
in response to that the first connection information is used to indicate that there is not a connection between the target secondary node and the source secondary node, and the second connection information is used to indicate that there is a connection between the target secondary node and the source master node, the first data forwarding address is the data forwarding address corresponding to the target secondary node; or
in response to that the first connection information is used to indicate that there is not a connection between the target secondary node and the source secondary node, and the second connection information is used to indicate that there is not a connection between the target secondary node and the source master node, the first data forwarding address is a data forwarding address corresponding to the target master node.

In some embodiments, the receiving module 92 is configured to receive a handover request response message sent from the target master node, where the handover request response message includes the first data forwarding address.

In some embodiments, for the node where the to-be-migrated bearer is originally located is the source secondary node, the handover request response message further includes the first connection information, and the first connection information is used to indicate that there is a connection between the target secondary node and the source secondary node.

In some embodiments, the sending module 91 is configured to send a second data forwarding address to the source secondary node based on the first connection information.

In some embodiments, in response to that the first connection information is used to indicate that there is a connection between the target secondary node and the source secondary node, the second data forwarding address is the first data forwarding address.

In some embodiments, the sending module 91 is configured to send a handover request message sent from the target master node, where the handover request message includes the information of the node where the to-be-migrated bearer is originally located.

In a case where the functions of the above integrated modules are implemented in the form of hardware, the embodiments of the present disclosure further provide a possible structure of a communication apparatus, and the communication apparatus is configured to perform the data forwarding method provided in the embodiments of the present disclosure. As shown in FIG. 15, the communication apparatus 100 includes a communication interface 103, a processor 102 and a bus 104. In some embodiments, the communication apparatus may further include a memory 101.

The processor 102 may implement or perform various exemplary logical blocks, modules and circuits described in conjunction with the embodiments of the present disclosure. The processor 102 may be a central processing unit, a general-purpose processor, a digital signal processor, an application specific integrated circuit, a field programmable gate array or any other programmable logic device, a transistor logic device, a hardware component, or any combination thereof. The processor 102 may implement or perform various exemplary logical blocks, modules and circuits described in conjunction with the embodiments of the present disclosure. The processor 102 may also be a combination that implements computing functions, for example, including a combination of one or more microprocessors, a combination of a digital signal processor (Digital Signal Processor, DSP) and a microprocessor, etc.

The communication interface 103 is configured to connect to other devices via a communication network. The communication network may be the Ethernet, wireless access network, wireless local area networks (WLAN), etc.

The memory 101 may be, but is not limited to, a read-only memory (ROM) or any other type of static storage device capable of storing static information and instructions, a random access memory (RAM) or any other type of dynamic storage device capable of storing information and instructions, or an electrically erasable programmable read-only memory (EEPROM), a magnetic disk storage medium or any other magnetic storage device, or any other medium capable of being used to carry or store desired program codes and capable of being accessed by a computer, where the desired program codes have instructions or are in the form of data structure.

As an implementation, the memory 101 may exist independently of the processor 102, and the memory 101 may be connected to the processor 102 via the bus 104 and is used for storing instructions or program codes. The processor 102, when calling and executing the instructions or program codes stored in the memory 101, is capable of implementing the data forwarding method, provided in the embodiments of the present disclosure.

As another implementation, the memory 101 may be integrated with the processor 102.

The bus 104 may be an extended industry standard architecture (EISA) bus or the like. The bus 104 may be divided into an address bus, a data bus, a control bus, and so on. For the convenience of representation, only one thick line is used in FIG. 15 for representation, but it does not mean that there is only one bus or one type of bus.

Some embodiments of the present disclosure provide a computer readable storage medium (e.g., a non-transitory computer readable storage medium), and the computer-readable storage medium has stored computer program instructions therein that, when running on a computer, cause the computer to perform the data forwarding method as described in any embodiment of the above-mentioned embodiments.

In an exemplary implementation, the computer may be the above-mentioned data forwarding apparatus, and the present disclosure does not limit the specific form of the computer.

In some examples, the above-mentioned computer readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer readable storage media described in the present disclosure may represent one or more devices and/or other machine-readable storage media for storing information. The term "machine-readable storage medium" may include, but is not limited to, a radio channel and various other media capable of storing, containing, and/or carrying instructions and/or data.

The embodiments of the present disclosure provide a computer program product containing instructions, and the computer program product, when running on a computer, causes the computer to perform the data forwarding method as described in any embodiment of the above-mentioned embodiments.

The above is merely specific implementations of the present disclosure, but the protection scope of the present disclosure is not limited thereto. Any change or replacement within the technical scope disclosed in the present disclosure shall be included in the protection scope of the present disclosure. Therefore, the protection scope of the present disclosure shall be determined by the protection scope of the claims.

## Claims

1. A data forwarding method, wherein the method is applied to a target master node and comprises:
acquiring information of a node where a to-be-migrated bearer is originally located;
acquiring first connection information based on the information of the node where the to-be-migrated bearer is originally located; wherein the first connection information is used to indicate whether there is a connection between the node where the to-be-migrated bearer is originally located and a target secondary node; and
sending a first data forwarding address of the to-be-migrated bearer to a source master node based on the first connection information.

2. The method according to claim 1, wherein for the node where the to-be-migrated bearer is originally located is the source master node:
in response to that the first connection information indicates that there is a connection between the target secondary node and the source master node, the first data forwarding address is a data forwarding address corresponding to the target secondary node; or
in response to that the first connection information indicates that there is not a connection between the target secondary node and the source master node, the first data forwarding address is a data forwarding address corresponding to the target master node.

3. The method according to claim 1, wherein for the node where the to-be-migrated bearer is originally located is a source secondary node, sending the first data forwarding address of the to-be-migrated bearer to the source master node based on the first connection information comprises:
acquiring second connection information, wherein the second connection information is used to indicate whether there is a connection between the source master node and the target secondary node; and
sending the first data forwarding address to the source master node based on the first connection information and the second connection information.

4. The method according to claim 3, wherein
in response to that the first connection information indicates that there is a connection between the target secondary node and the source secondary node, the first data forwarding address is a data forwarding address corresponding to the target secondary node; or
in response to that the first connection information indicates that there is not a connection between the target secondary node and the source secondary node, and the second connection information indicates that there is a connection between the target secondary node and the source master node, the first data forwarding address is the data forwarding address corresponding to the target secondary node; or
in response to that the first connection information indicates that there is not a connection between the target secondary node and the source secondary node, and the second connection information indicates that there is not a connection between the target secondary node and the source master node, the first data forwarding address is a data forwarding address corresponding to the target master node.

5. The method according to claim 1, wherein acquiring the first connection information based on the information of the node where the to-be-migrated bearer is originally located comprises:
sending a secondary node addition request message to the target secondary node, wherein the secondary node addition request message comprises the information of the node where the to-be-migrated bearer is originally located; and
receiving a secondary node addition request response message sent from the target secondary node, wherein the secondary node addition request response message comprises the first connection information.

6. The method according to claim 5, wherein the secondary node addition request response message further comprises a data forwarding address corresponding to the target secondary node.

7. The method according to claim 5, wherein for the node where the to-be-migrated bearer is originally located is a source secondary node, the secondary node addition request response message further comprises second connection information, and the second connection information is used to indicate whether there is a connection between the source master node and the target secondary node.

8. The method according to claim 5, wherein for the node where the to-be-migrated bearer is originally located is the source secondary node, the secondary node addition request message further comprises an identifier of the source master node.

9. The method according to claim 5, wherein acquiring the information of the node where the to-be-migrated bearer is originally located comprises:
receiving a handover request message sent from the source master node, wherein the handover request message comprises the information of the node where the to-be-migrated bearer is originally located.

10. The method according to claim 1, wherein sending the first data forwarding address of the to-be-migrated bearer to the source master node comprises:
sending a handover request response message to the source master node, wherein the handover request response message comprises the first data forwarding address.

11. The method according to claim 10, wherein the handover request response message further comprises the first connection information.

12. A data forwarding method, wherein the method is applied to a source master node and comprises:
sending information of a node where a to-be-migrated bearer is originally located; and
receiving a first data forwarding address of the to-be-migrated bearer sent from a target master node; wherein the first data forwarding address is determined according to first connection information; the first connection information is used to indicate whether there is a connection between the node where the to-be-migrated bearer is originally located and the target secondary node.

13. The method according to claim 12, wherein for the node where the to-be-migrated bearer is originally located is the source master node:
in response to that the first connection information indicates that there is a connection between the target secondary node and the source master node, the first data forwarding address is a data forwarding address corresponding to the target secondary node; or
in response to that the first connection information indicates that there is not a connection between the target secondary node and the source master node, the first data forwarding address is a data forwarding address corresponding to the target master node.

14. The method according to claim 12, wherein for the node where the to-be-migrated bearer is originally located is a source secondary node, the first data forwarding address is determined based on the first connection information and second connection information, and the second connection information is used to indicate whether there is a connection between the source master node and the target secondary node.

15. The method according to claim 14, wherein
in response to that the first connection information indicates that there is a connection between the target secondary node and the source secondary node, the first data forwarding address is a data forwarding address corresponding to the target secondary node; or
in response to that the first connection information indicates that there is not a connection between the target secondary node and the source secondary node, and the second connection information is used to indicate that there is a connection between the target secondary node and the source master node, the first data forwarding address is the data forwarding address corresponding to the target secondary node; or
in response to that the first connection information indicates that there is not a connection between the target secondary node and the source secondary node, and the second connection information is used to indicate that there is not a connection between the target secondary node and the source master node, the first data forwarding address is a data forwarding address corresponding to the target master node.

16. The method according to claim 12, wherein receiving the first data forwarding address of the to-be-migrated bearer sent from the target master node comprises:
receiving a handover request response message sent from the target master node, wherein the handover request response message comprises the first data forwarding address.

17. The method according to claim 16, wherein for the node where the to-be-migrated bearer is originally located is the source secondary node, the handover request response message further comprises the first connection information, and the first connection information is used to indicate that there is a connection between the target secondary node and the source secondary node.

18. The method according to claim 17, further comprising:
sending a second data forwarding address to the source secondary node based on the first connection information.

19. The method according to claim 18, wherein
in response to that the first connection information indicates that there is a connection between the target secondary node and the source secondary node, the second data forwarding address is the first data forwarding address.

20. The method according to claim 12, wherein sending the information of the node where the to-be-migrated bearer is originally located comprises:
sending a handover request message sent from the target master node, wherein the handover request message comprises the information of the node where the to-be-migrated bearer is originally located.

21. A communication apparatus, comprising a memory, a processor, and computer program instructions stored on the memory and runnable on the processor, wherein the processor, when executing the computer program instructions, implements the method according to any one of claims 1 to 20.

22. A computer readable storage medium, comprising computer program instructions;
wherein the computer program instructions, when executed on a computer, cause the computer to perform the method according to any one of claims 1 to 20.
